# EUROPEAN PATENT APPLICATION

(11) **EP 0 684 262 A2**
(43) Date of publication of application: **29.11.1995**
(21) Application number: 95303552.4
(22) Date of filing: 25.05.1995
(51) Int. Cl.: C08F 8/46, C08F 8/32

(54) **Treatment of lubricating oil intermediates**

(30) Priority: 26.05.1994 US 249520
(71) Applicant: THE LUBRIZOL CORPORATION, Wickliffe, Ohio 44092-2298 (US)
(72) Inventor: Baumanis, Charles K., Chardon, Ohio 44024 (US); Maynard, Marvin M., Concord, Ohio 44077 (US)
(74) Representative: Crisp, David Norman

(57) **Abstract**

The present invention describes a process for reducing the chlorine content of a chlorinated member of polypropylene, polyisobutylene, a mixture of polypropylene and polypropylene succinic anhydride or a mixture of polyisobutylene and polyisobutylene succinic anhydride; including the step of treating any of the above or mixtures thereof with heat for a specified period of time.

## Description

This invention relates to the treatment of lubricating oil intermediates and in particular to treat such intermediates to reduce the chlorine content of the intermediate.

United States Patent 5,252,238 issued October 12, 1993 to Chung et al teaches a polyisobutenyl succinic anhydride having a functionality of about 1.05 which is stripped with nitrogen for 1/2 hour. Degonia et al in United States Patent 5,241,003 issued August 31, 1993 describes high temperature (180° to 250°C) direct alkylation.

In United States Patent 5,225,093 issued July 6, 1993 to Campbell et al an alkylated succinic acylating agent reacted with a polyamine is described as being vacuum stripped for 0.25 hours at 150°C. The Roper Patent in United States Patent 5,221,491 issued June 22, 1993 teaches the stripping of polyamines at 120°C and 150°C.

United States Patent 5,202,036 issued April 13, 1993 to Ripple et al describes stripping at 210°C of a polyisobutene-substituted succinic acylating agent.

United States Patent 5,182,037 issued January 26, 1993 to Pialet et al teaches treatment of acylating agents at 200° to 210°C. United States Patent 5,230,834 issued July 27, 1993 to Gutierrez et al teaches reacting a polymer and maleic anhydride and chlorine at temperatures of 100° to 250°C.

United States Patent 5,177,288 issued January 5, 1993 to Chen teaches the processing of polybutenyl succinic anhydride. United States Patent 5,041,622 issued August 20, 1991 to LeSuer teaches the preparation of a polyisobutene-substituted succinic acylating agent which is stated to be stripped at 200°C under vacuum.

United States Patent 4,997,594 issued March 5, 1991 to Walsh teaches the processing of a short chain substituted succinic anhydride to remove unreacted starting materials utilizing a vacuum distillation to 5 mm Hg. at 200°C. United States Patent 4,981,602 issued January 1, 1991 to Ripple et al teaches stripping of a polyisobutene-substituted succinic acylating agent at 210°C. A similar product is described as being treated by Ripple et al with nitrogen blowing for 2 hours and stripped under vacuum at 203°C. Further disclosures in Ripple et al teach stripping at 150°C under vacuum. United States Patent 4,613,-341 issued September 23, 1986 to Zaweski et al teaches the preparation of a secondary C₁₈ alkenyl succinic anhydride processed by vacuum to 30"Hg (760 mm) at 200°C. United States Patent 4,517,104 issued May 14, 1983 to Bloch et al teaches stripping of aminated compounds at 190° for 1.5 hours.

The general disclosures of the foregoing documents do not teach the rigorous technique required for a succinated product which has incorporated therein substantial amounts of chlorine nor the need to remove chemically bound chlorine from a succinated product, and in particular not a polysuccinated product.

Herein percentages and ratios are by weight unless otherwise indicated. Temperatures are in degrees Celsius and pressures are in KPa gauge unless otherwise indicated. Ranges and ratios given herein may be combined.

In one aspect, the present invention provides a process of reducing the chlorine content of a member of an initial mixture selected from the group consisting of a hydrocarbyl compound and a hydrocarbyl substituted succinic acylating agent and mixtures thereof wherein the hydrocarbyl substituent of the hydrocarbyl substituted succinic acylating agent has a Mn value of 1300 to about 5000 and a Mw/Mn value of about 1.5 to about 4 provided further that there are at least about 1.05 succinic groups for each equivalent weight of the groups derived from the hydrocarbyl substituent wherein the member of the initial mixture is stripped with an inert gas for at least about 4 hours at a temperature of at least about 195°C to give a resultant member of reduced chlorine content.

In a further aspect, the present invention provides a process of reducing the chlorine content of a member of an initial mixture selected from the group consisting of a hydrocarbyl compound and a hydrocarbyl substituted succinic acylating agent and mixtures thereof wherein the hydrocarbyl substituent of the hydrocarbyl substituted succinic acylating agent has a Mn value of 1300 to about 5000 and a Mw/Mn value of about 1.5 to about 4 provided further that there are at least about 1.05 succinic groups for each equivalent weight of the groups derived from the hydrocarbyl substituent wherein the member of the initial mixture is stripped with an inert gas for at least about 3 hours at a temperature of at least about 200°C to give a resultant member of reduced chlorine content.

In a yet further aspect, the invention provides a process of reducing the chlorine content of a member of an initial mixture selected from the group consisting of a hydrocarbyl compound and a hydrocarbyl substituted succinic acylating agent and mixtures thereof wherein the hydrocarbyl substituent of the hydrocarbyl substituted succinic acylating agent has a Mn value of 1300 to about 5000 and a Mw/Mn value of about 1.5 to about 4 provided further that there are at least about 1.05 succinic groups for each equivalent weight of the groups derived from the hydrocarbyl substituent wherein the member of the initial mixture is stripped with an inert gas for at least about least 2 hours at a temperature of at least about 210°C to give a resultant member of reduced chlorine content.

Also within the scope of the present invention are the products of the above processes, as well as such products and an oil of lubricating viscosity and/or fuel such as gasoline or diesel.

A further aspect of the invention provides the products of the above processes reacted with a polyamine and/or a polyol; as well as the foregoing and an oil of lubricating viscosity and/or gasoline.

Various preferred features and embodiments of the invention are described below by way of non-limiting illustration.

The present invention as previously noted relates to treating lubricating oil intermediates to reduce the chlorine content of the intermediate.

For many years chlorine has been used to facilitate the processing of various organic compounds to obtain a variety of useful products. Organic compounds whether intentionally incorporating chlorine or by carrying a chlorine containing by-product may generate hydrochloric acid upon burning.

It has been found that by treating certain lubricating oil intermediates as described herein that the products are substantially reduced in chlorine content.

The present invention then deals with the heat treatment of hydrocarbyl substituted succinic acylating agents and in particular those which are made by a chlorine process. Typically, a chlorine process is such as that described in United States Patent 4,234,435 issued November 18, 1980 to Meinhardt, et al. The reason for the chlorine content in the anhydride compounds of Meinhardt, and subsequently, in a lubricating oil dispersant and other products made from the Meinhardt process is the use of chlorine to effect alkylation of a hydrocarbyl polymer to an acylating agent.

Thus the products of the Meinhardt, et al patent describe chlorine containing compositions which may be treated according to the present invention.

A preferred hydrocarbyl compound which may be treated according to the present invention in order to reduce the chlorine content thereof is a polyalkylene and/or a polyalkylenesuccinic anhydride and in particular a polyisobutenylsuccinic anhydride. The preferred compounds have a Mn value of about 1,300 to about 5,000 and an Mw/Mn value of about 1.5 to about 4. The acylating agent is further characterized by having within its structure at least 1.05 preferably, 1.3 of the dibasic, carboxylic groups on the acylating agent for each equivalent weight of the groups derived from the polyalkyene (polyisobutylene). It is often the case that the polyalkylene and the polyalkylenesuccinic anhydride will have substantially the same Mn, and Mw/Mn values but such may differ substantially if desired. For the purpose of convenience, the disclosure of preferred organochlorine compounds which may be treated according to the present invention is found in United States Patent 4,234,435 issued November 18, 1980 to Meinhardt and Davis.

One method of preparing a succinic acylating agent is described as follows. This procedure is conveniently designated as a "two-step procedure." It involves first chlorinating the polyalkene until there is an average of at least about one chloro group for each molecular weight of polyalkene. (For purposes of this invention, the molecular weight of the alkene is the weight corresponding to the Mn value.) Chlorination involves merely contacting the polyalkene with chlorine gas until the desired amount of chlorine is incorporated into the chlorinated polyalkene. Chlorination is generally carried out at temperatures of about 75°C to about 125°C. If a diluent is used in the chlorination procedure, it should be one which is not itself readily subject to chlorination. Poly- and perchlorinated and/or fluorinated alkyl benzenes are examples of suitable diluents.

The second step in the two-step chlorination procedure is to react the chlorinated polyalkene with a maleic reactant at a temperature usually within the range of about 100°C to about 200°C. The mole ratio of chlorinated polyalkene to maleic reactant is usually about 1:1. (For purposes of making the two-step chlorinated product, a mole of chlorinated polyalkene is that weight of chlorinated polyalkene corresponding to the Mn value of the unchlorinated polyalkene.) However, a stoichiometric excess of maleic reactant can be used, for example, a mole ratio of 1:2.

If an average of more than about one chloro group per molecule of polyalkene is introduced during the chlorination step, then more than one mole of maleic reactant can react per molecule of chlorinated polyalkene. Because of such situations, it is better to describe the ratio of chlorinated polyalkene to maleic reactant in terms of equivalents. (An equivalent weight of chlorinated polyalkene, for the preparation of a two-step chlorinated product, is the weight corresponding to the Mn value divided by the average number of chloro groups per molecule of chlorinated polyalkene while the equivalent weight of the maleic reactant is its molecular weight.)

Thus, the ratio of chlorinated polyalkene to maleic reactant will normally be such as to provide about one equivalent of maleic reactant for each mole of chlorinated polyalkene up to about one equivalent of maleic reactant for each equivalent of chlorinated polyalkene with the understanding that it is normally desirable to provide an excess of maleic reactant; for example, an excess of about 5% to about 25% by weight. Unreacted excess maleic reactant may be stripped from the reaction product, usually under vacuum, or reacted during a further stage of the process as explained below.

The resulting polyalkenyl-substituted succinic acylating agent is, optionally, again chlorinated if the desired number of succinic groups are not present in the product. If there is present, at the time of this subsequent chlorination, any excess maleic reactant from the second step, the excess will react as additional chlorine is introduced during the subsequent chlorination. Otherwise, additional maleic reactant is introduced during and/or subsequent to the additional chlorination step. This technique can be repeated until the total number of succinic groups per equivalent weight of substituent groups reaches the desired level.

Another procedure for preparing substituted succinic acid acylating agents utilizes a process described in U.S. Patent No. 3,912,764 and U.K. Patent No. 1,440,219. According to that process, the polyalkene and the maleic reactant are first reacted by heating them together in a "direct alkylation" procedure. When the direct alkylation step is completed, chlorine is introduced into the reaction mixture to promote reaction of the remaining unreacted maleic reactants. According to the patents, 0.3 to 2 or more moles of maleic anhydride are used in the reaction for each mole of olefin polymer; i.e. polyalkene. The direct alkylation step is conducted at temperatures of 180°C to 250°C. During the chlorine-introducing stage, a temperature of 160°C to 225°C is employed. In utilizing this process to prepare the substituted succinic acylating agents useful herein, it is desirably necessary to use sufficient maleic reactant and chlorine to incorporate at least 1.05, preferably at least 1.15, and more preferably at least 1.3 succinic groups in the succinated polyalkylene polymer product for each equivalent weight of the groups derived from the polyalkene.

A further method of preparing a succinic acylating agent is disclosed in United States Patent 3,231,587 issued January 25, 1966 to Rense. This process is known as the "one step" process.

Thus, a further process for preparing hydrocarbon-substituted succinic anhydrides comprises preparing a mixture of an olefin polymer and maleic anhydride, and contacting said mixture at a temperature above about 140°C with at least about one mole of chlorine for each mole of maleic anhydride. The product of the above process, as indicated before, is a hydrocarbon-substituted succinic anhydride, but it is not yet established whether the hydrocarbon radical is a saturated radical or one having olefinic linkages.

To carry out the acylation process, it is preferred that the chlorine be introduced into the reaction zone after the olefin polymer has been thoroughly mixed with maleic anhydride. If the chlorine is allowed to come into contact with the olefin polymer prior to the introduction of maleic anhydride, over-chlorination of the polymer may take place thus complicating chlorine removal process and diminishing the advantageous results of the invention. The rate of introduction of the chlorine is not critical. Ordinarily, for maximum utilization of the chlorine used, the rate should be about the same as the rate of consumption of chlorine in this reaction.

The minimum temperature at which the reaction of the above process takes place at a reasonable rate is about 125°C; hence, the minimum temperature at which the process should be carried out is in the neighborhood of 125°C. The preferred temperatures usually range between about 140°C and about 220°C. Higher temperatures such as 250°C or even higher may be used but usually with little advantage. The upper limit of the usable temperature is determined primarily by the decomposition point of the components in the reaction mixture.

The stoichiometry of the reaction involved in the herein described process requires approximately equimolar amounts of the maleic anhydride and the chlorine be used. For practical considerations, however, a slight excess, usually in the neighborhood of 20-30%, of chlorine is preferred in order to offset any accidental loss of this gaseous reactant from the reaction mixture. Still greater amounts of chlorine may be used but they do not appear to produce any noticeable benefits.

The relative amounts of the olefin polymer and maleic anhydride will vary according to the proportion of the succinic anhydride radicals desired in the product. Thus, for each mole of the polymer employed, one or more moles of maleic anhydride may be used depending upon whether one or more succinic anhydride radicals are to be incorporated in each polymer molecule. When a molar excess of the polymer reactant is used, the excess polymer will simply remain in the product as a diluent.

As indicated previously the process of this invention is applicable to the treatment of hydrocarbon substituted succinic anhydride derived from olefin polymers. The olefin polymers include principally the homopolymers and copolymers of lower mono-olefin, i.e., ethylene, propene, isobutene, and n-butene. Copolymers of the above-illustrated lower mono-olefins with copolymerizable higher mono-olefins or diolefins such as hexene, cyclohexene, butadiene, isoprene, chloroprene, etc. are likewise contemplated for use herein, provided that the lower monoolefin units comprise at least 90-95% by weight of the polymer. The copolymers may be exemplified by copolymers of 99% of isobutene with 1% of butadiene, copolymers of 95% of isobutene with 5% of styrene, copolymers of 98% of propene with 2% of piperylene, terpolymers of 98% of isobutene with 1% of piperylene and 1% of propene, etc. For the most part, polymers of isobutene are preferred for reasons of their ready availability and the particular utility of the products obtained therefrom. The molecular weights of the polymers contemplated for use herein may vary within broad limits such as from about 100 to about 50,000 or even higher.

The present invention contemplates the use of the products herein as intermediates for the manufacture of dispersants for lubricants, and in particular lubricants for four cycle engine crankcases. Such dispersants may be made by reaction with polyamines as described in United States Patent 4,234,435 issued November 18, 1980 to Meinhardt and Davis or United States Patent 3,215,707 issued November 2, 1965 to Rense. The products of the invention are also useful as intermediates for, and components, of two cycle oils and fuels including fuel. The aminated products obtained herein are often used in concentrate or additive packages.

The method of practicing the present invention is by treating the hydrocarbyl substituted succinic acylating agent for a sufficient period of time at a sufficient temperature to reduce the chlorine content of the hydrocarbyl substituted succinic acylating agent and/or any unreacted hydrocarbyl precursor to the hydrocarbyl substituted succinic acylating agent.

Typically by practicing the present invention the chlorine content of the hydrocarbyl substituted succinic acylating agent and/or the precursor hydrocarbyl substituted precursor is reduced by about 10%, preferably 20%, more preferably 30% and most preferably at least by 35%. The measurements herein are done on a weight basis of the chlorine in the starting chlorine containing component. That is, if a compound contains 10 grams of chlorine per 990 grams of the remainder of the compound there is 0.1% chlorine in the starting compound. If the chlorine content of the compound is stated to be reduced by 30% then there remains 0.07% chlorine in the starting compound. As a practical matter when treating a mixture of the hydrocarbyl substituted succinic acylating agent and the precursor hydrocarbyl substituted precursor it is the reduction of the total level of chlorine in the mixture which is important and thus that which is measured.

Typically, the chlorine is removed in the present invention by evaporating the more volatile chlorine components from the composition. The removal of the chlorine from the composition is in addition to any free chlorine which is physically entrained in the reaction mixture. That is, as chlorine is introduced in the Meinhardt, et al process some amount of chlorine is invariably in the mixture. The present invention deals with removing that chlorine which is chemically incorporated in the organic compound as contrasted to the residual molecular chlorine and/or hydrogen chloride by-product which is easily removed by routine vacuum stripping.

The chlorine content of the starting products is typically 0.05% to 2.0%; often 0.25% to 1.5%; or 0.35% to 1.2% by weight. The chlorine content of the resultant mixture (products) is in about the range of 0.005% to 1.7%; or 0.01% to 0.5%; or 0.015% to 0.3% by weight.

The present invention then operates by treating the hydrocarbyl substituted succinic acylating agent in the presence of an inert gas such as nitrogen or carbon dioxide for a period of at least about four hours and at least about 195°C. Preferably, the process may be carried out by heat treating the organochlorine compound for at least about three hours at 200°C. Yet a further variant of the present invention is to treat the organochlorine compound for at least about two hours at least about 210°C.

The foregoing processes are conducted such that the end product is still useful as an intermediate for the manufacture of dispersants for lubricating oils. Thus the upper limit of the temperature in processing may be as high as 300°C, preferably not greater than 270°C, and more preferably not greater than 235°C or 240°C. Of course, the practical upper limit to the processing temperature is the lowest temperature at which an essential ingredient in the composition decomposes.

The equipment useful for the removal of the chlorine from the organochlorine compound is typically a glass lined tank. Conveniently, the glass lined tank is the same tank in which the alkylation of the maleic anhydride is conducted per United States Patent 4,234,435. The invention herein is particularly useful with the extensively used polysuccinated dispersants made according to United States Patent 4,234,435. It is also noteworthy that the chlorination process should be discontinued prior to the removal of the chlorine according to the present invention to ensure that the chemically bound chlorine is being removed. Conveniently, the process of the present invention should not begin until at least about one minute and preferably at least about three minutes after the chlorination has been discontinued.

The following include suggested exemplifications of the present invention.

### EXAMPLE A

A material useful as a precursor for a dispersant in a motor oil is manufactured by forming a mixture of 1,000 parts (0.5 mole) of polyisobutene (Mn=2000; Mw=6400) and 106 parts (1.08 moles) of maleic anhydride which is heated to 110°C. This mixture is then heated to 138°C and further heated to 190°C over 6 hours during which 60 parts (0.85 moles) of gaseous chlorine is added beneath the surface.

At 184°-189°C an additional 30 parts (0.42 mole) of chlorine is added over 4 hours. The residue is the desired polyisobutene-substituted succinic acylating agent having a total acid number of 93. By analysis, the chlorine content of the above-identified product is about 0.72%.

### EXAMPLE I

A product made according to Example A is introduced to a glass lined vessel to which there is an inert gas line located subsurface. The product is maintained at 195°C for a period of six (6) hours while maintaining nitrogen flow.

The product which is recovered from the pot following treatment is 0.264% by weight chlorine.

### EXAMPLE II

The process of Example I is conducted as previously described with the exception that the temperature is maintained over the same period of time at 220°C.

The resulting product from the process of this Example is found to be 0.205% by weight chlorine.

Substantially similar results are obtained when utilizing polypropylene in place of the polyisobutylene in EXAMPLE A and this example.

### EXAMPLE III

The process of Example I is conducted as previously described with the exception that the treatment time is for 12 hours at 210°C. The residual chlorine content in the compound following the process of this Example is found to be 0.15% by weight.

Substantially similar results are obtained when utilizing polypropylene in place of the polyisobutylene in EXAMPLE A and this example.

### EXAMPLE IV

A product made according to Example A is introduced to a glass lined vessel to which there is an inert gas line located subsurface. The product is maintained at 195°C for a period of twelve hours while maintaining nitrogen flow at saturation levels.

The product which is recovered from the pot following treatment is 0.192% by weight chlorine.

### EXAMPLE V

The process of Example I is substantially followed with the exception that the temperature is raised to 220°C and held at that temperature for 24 hours.

The percent chlorine in the product after treatment according to this example is found to be 0.170% by weight.

### EXAMPLE VI

The process of Example I is conducted as previously described with the exception that the treatment time is for 24 hours at 195°C. The residual chlorine content in the compound following the process of this Example is 0.220% by weight.

### EXAMPLE VII

The product of Example I is processed according to Example 10 of the Meinhardt patent to give an aminated dispersant useful in a lubricating oil.

The products of Example II are processed according to Example 11 of the Meinhardt patent to give an aminated dispersant useful in a lubricating oil.

The products of Example III are processed according to Example 12 of the Meinhardt patent to give an aminated dispersant useful in a lubricating oil.

The product of Example IV is processed according to Example 13 of the Meinhardt patent to give a product containing ester and amine functionality which is useful as a dispersant in a lubricating oil.

Similar products may be made per the Meinhardt patent to obtain esters from polyols such as pentaerythritol.

The above products may otherwise be further treated according to industry practices to obtain further useful products such as boronated dispersants.

## Claims

1. A process of reducing the chlorine content of a member of an initial mixture selected from the group consisting of a hydrocarbyl compound and a hydrocarbyl substituted succinic acylating agent and mixtures thereof wherein the hydrocarbyl substituent of the hydrocarbyl substituted succinic acylating agent has an Mn value of 1300 to about 5000 and an Mw/Mn value of about 1.5 to about 4 provided further that there are at least about 1.3 succinic groups for each equivalent weight of the groups derived from the hydrocarbyl substituent wherein the member of the initial mixture is contacted with an inert gas for at least about 4 hours at a temperature of at least about 195°C to give a resultant mixture of reduced chlorine content.

2. The process of claim 1 wherein said chlorine-containing product is blown at a temperature of at least 210°C with said inert gas.

3. The process of claim 1 wherein said chlorine-containing product is blown with said inert gas for 6 to 24 hours at a temperature of 195°C to 220°C.

4. The process of any preceding claim wherein said inert gas is nitrogen.

5. The process of any preceding claim wherein the chlorine content of said chlorine-containing product is from 0.05% to 2% by weight, and said chlorine-containing product is a 20:1 to 1:20 weight ratio mixture of a polyisobutenyl succinic anhydride and polyisobutylene.

6. The process of any preceding claim wherein said hydrocarbyl-substituted succinic acylating agent contains at least 1.3 succinic groups for each equivalent weight of the hydrocarbyl group of said hydrocarbyl-substituted succinic acylating agent.

7. The process of any preceding claim wherein the chlorine content of said chlorine-containing product is reduced by at least 35% by weight.

8. A product made by the process of any preceding claim.

9. A product made by the process of any one of claims 1 to 7 wherein said product is further reacted with a polyamine, a polyol or a mixture thereof.

10. A product of claim 8 or claim 9 wherein said product is dispersed in an oil of lubricating viscosity or a normally liquid fuel.
